# EUROPEAN PATENT APPLICATION

(11) **EP 2 305 536 A1**
(43) Date of publication of application: **06.04.2011**
(21) Application number: 09172020.1
(22) Date of filing: 02.10.2009
(51) Int. Cl.: B62B 3/02, B62B 3/04

(54) **Cart for transporting objects**

(71) Applicant: N. Aarnoudse B.V., 2992 KB Barendrecht (NL)
(72) Inventor: Hoefsloot, Paulus Franciscus Maria, 6845 DK, Arnhem (NL); Dekker, Elmar, 4101 NG, Culemborg (NL); Korthorst, Marinus, 3024 EG, Rotterdam (NL); Linders, Thomas Franciscus, 3043 BD, Rotterdam (NL)
(74) Representative: Voncken, Bartholomeus Maria Ch.

(57) **Abstract**

A cart is provided for transporting objects, with a frame which at its lower side carries whells and at its upper side is provided with two support means for supporting the objects to be transported by the cart. The support means are movable between a first position defining a support with a larger first width and a second position defining a support with a smaller second width.

## Description

The invention relates to a cart for transporting objects. Such carts among others are used by professional movers for transporting various objects from a house towards a moving van and vice versa. Known carts often are dedicated to transporting specific objects or a range of specific objects. As a consequence said carts do not properly function when transporting other objects, and a range of different carts would be preferable.

It is an object of the present invention to provide an improved cart of the type referred to above.

Thus, in accordance with the present invention a caret for transporting objects is provided with a frame, which frame at its lower side carries wheels and at its upper side is provided with two support means for supporting the objects to be transported by the cart, which support means are movable between a first position defining a support with a larger first width and a second position defining a support with a smaller second width.

As a result the cart may be adapted for offering a support fit best for supporting a specific object to be transported.

When, in a preferred embodiment of the cart according to the present invention, the support means are lockable too in desired positions in between the first and second positions, the range of objects which the cart can transport in a reliable manner may be expanded even more. For example the support means may extend at an angle of 45° with respect to a vertical line (thus at an angle of 90° with respect to each other).

Preferably, then, the support means are lockable in said desired positions in between the first and second positions in a continuously variable manner.

In a specific embodiment of the cart each support means is connected to the frame for a rotation around a substantially horizontally extending pivot axis. The movement between the first and second positions then occurs through a rotation of the support means around the pivot axes. But also sliding movements are conceivable.

In an embodiment the support means in the first position extend from their respective pivot axes substantially in the same plane and away from each other, and in the second position extend from their respective pivot axes substantially in the same plane and towards each other.

As a result the support means define a support with enlarged width in the first position, compared to a decreased width in the second position.

In yet another embodiment the support means substantially touch each other in the second position, whereas in the first position a free space is present between the support means. In the second position a substantially continuous support is defined which is well suited for small objects, whereas in the first position a large object may be supported or an object also may be positioned between the support members.

Preferably each support means comprises a U-shaped brace having two legs of which the ends are pivotably connected to the frame. Such braces may define an effective support without adding too much weight to the cart. Of course other shapes of the support member are conceivable too.

When the pivot axes comprise quick lock means for locking the support means with respect to the frame in any position from the first to the second positions, including any intermediate position, the support members may be adapted swiftly and conveniently to specific objects.

It is possible too that the frame comprises two frame parts which are movable towards and away from each other between a collapsed position of the cart and an expanded position of the cart. In the collapsed position the cart will require only limited space, for example in a loading compartment of a moving van, and in the expanded position it offers increased stability, which especially is important when transporting large and/or heavy objects.

The frame parts may be connected by a linkage arrangement, and in such a case it is possible too that the linkage arrangement at its upper side defines additional support members for objects to be transported. Specifically in a first position of the support means in which these define a free space therebetween, such additional support members (which, for example, may comprise a padding on top of the linkage arrangement members) may be used to support an object positioned in said free space, while at the same time the support means laterally engage and stabilise said object.

In yet another embodiment of the cart the linkage arrangement is capable of locking the frame parts in positions different from the collapsed position and expanded position. Thus the cart also may be used in other positions, for example a position with reduced width for allowing it to move through narrow passages (assuming that the object's width is not too large).

For ensuring a stable and secure position of objects on the cart the frame may be provided with securing means for securing objects to the cart, such as ropes, belts or alike. When, as discussed above, U-shaped braces are used as support means the securing means may extend through the braces without interfering therewith.

In another embodiment the wheels all are fixed wheels, which adds to the stability of the cart and wherein steering the cart can be achieved after tilting the cart on two wheels (rear wheels or front wheels), or the wheels at least in part are castor wheels.

Further it is possible that the frame at least at one end of the cart is provided with support wheels located at an elevated level. Such support wheels avoid tipping over of the cart when it is tilted (e.g. for steering purposes, for moving the cart onto a side walk or for positioning/removing an object onto/from the cart).

Finally it is preferred that at least one of the wheels comprises a brake assembly, which for example may be hand- or foot-operated.

Hereinafter the invention will be elucidated while referring to the drawing in which:
Fig.1 shows a perspective view of a collapsible embodiment of the cart in a first position;
Fig.2 shows the process of collapsing the cart;
Fig.3 shows a detail of a quick lock means during operation;
Fig.4 shows the cart of figure 1 in a second position;
Fig.5 shows the cart of figure 1 in an intermediate position;
Fig.6 illustrates the use of the cart for transporting an object;
Fig.7 illustrates the use of the cart for transporting a different object;
Fig.8 illustrates the use of the cart for transporting yet another object;
Fig.9 illustrates the function of support wheels, and
Figs. 10-12 illustrate another use of the cart for transporting objects.

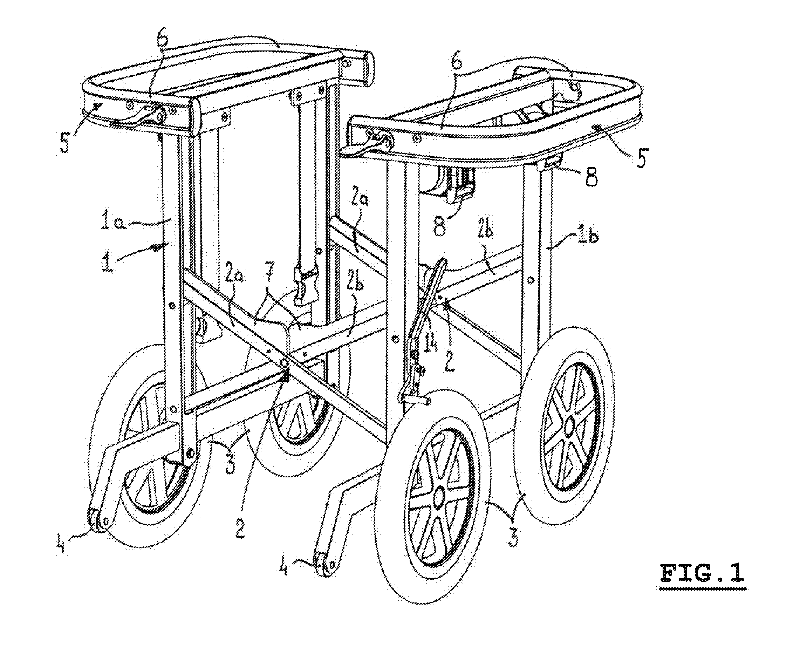

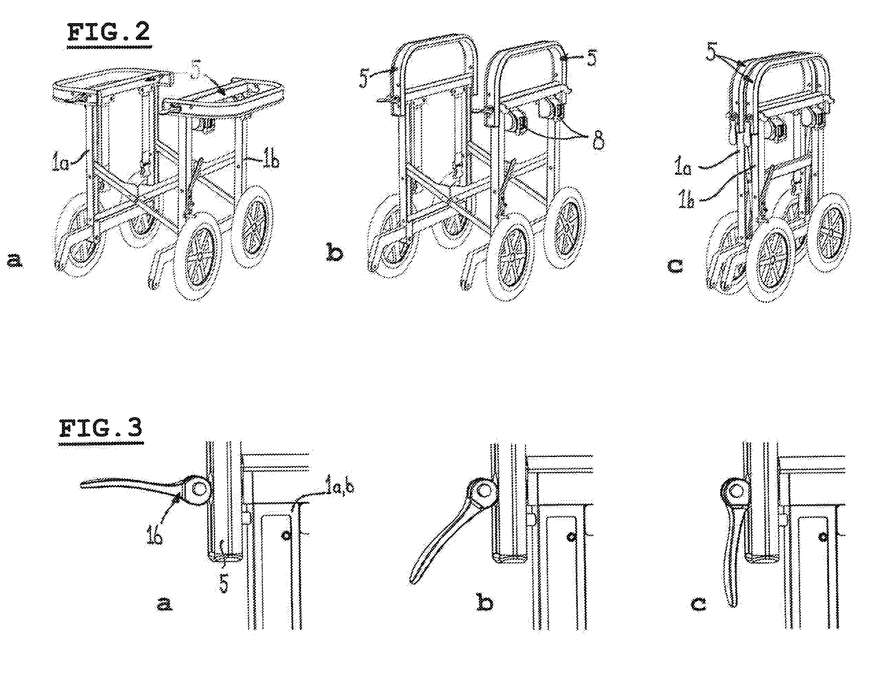

The cart for transporting objects is illustrated in an collapsible embodiment in figure 1 and is provided with a frame 1 comprising two symmetrical frame parts 1a and 1b which are movable towards and away from each other between a collapsed position (see figure 2c) of the cart and an expanded position of the cart (see, among others, figure 1). The frame parts 1a and 1b are connected by a linkage arrangement 2 which, in a manner known per se, comprises two pairs of linked arms 2a, 2b, wherein each arm with its lower end is linked to a respective frame part and with its upper end is slideable with respect to the opposite frame part.

The linkage arrangement 2 is capable of locking the frame parts 1a and 1b in the collapsed and expanded positions, but may also be devised for locking the frame parts in other, intermediate, positions different from the collapsed position and expanded position. This may be achieved by appropriate locking means not illustrated in detail (which, for example, may cooperate with the sliding upper ends of the arms 2a, 2b).

At its lower side each frame part 1a, 1b carries two wheels 3 which in the present case all are fixed wheels. If needed, however, also castor wheels may be provided. At least one of the wheels comprises a brake assembly 14, which in the illustrated embodiment is connected to the frame.

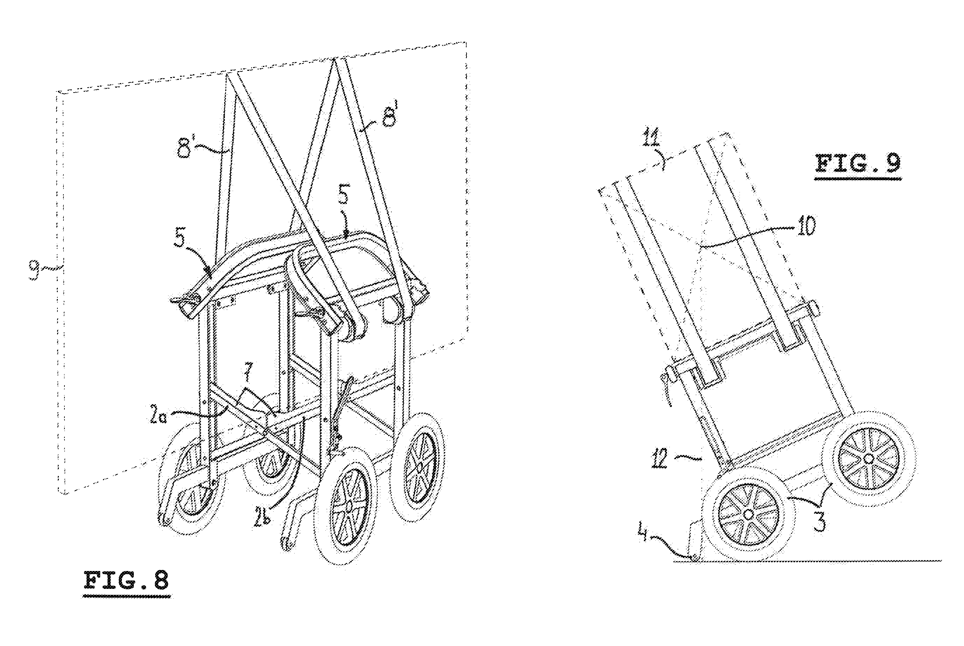

Each frame part 1a, 1b in front of one of its wheels 3 is provided with a support wheel 4 located at an elevated level with respect to the wheels 3. Its function will be explained later with respect to figure 9.

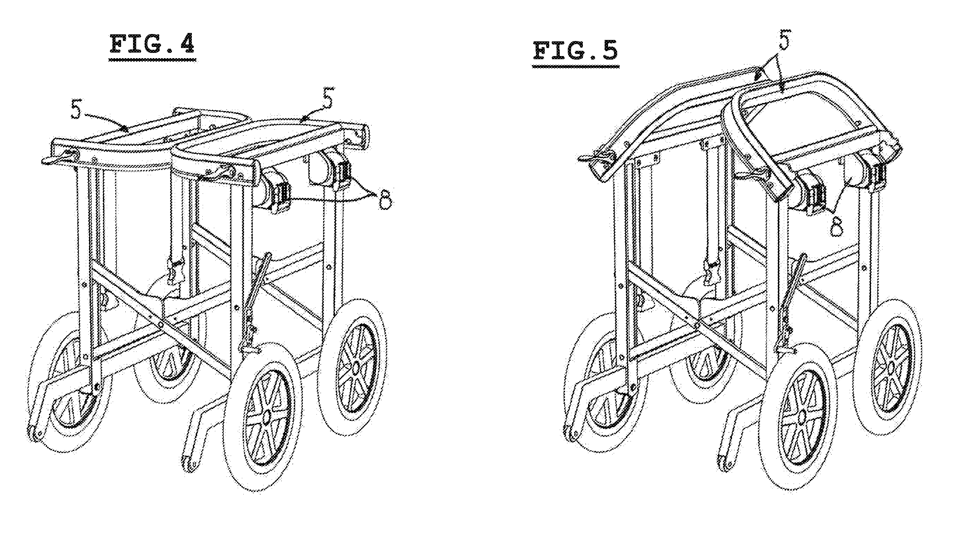

At its upper side each frame part 1a, 1b is provided with support means 5 for supporting objects to be transported by the cart. Independently from the movement of the frame parts 1a, 1b between the collapsed and expanded positions these support means 5 are movable between a first position (see figures 1, 2a, 6 and 7) defining a support with a first, larger, width and a second position (see figure 4) defining a support with a second, smaller, width.

In the illustrated embodiment of the cart each support means 5 comprises a U-shaped brace having two legs 6 of which the ends are pivotably connected to the respective frame part 1a, 1b. As a result each support means or brace 5 is connected to the respective frame part 1a, 1b for a rotation around a substantially horizontally extending pivot axis wherein the support means 5 in the first position extend from their respective pivot axes substantially in the same plane and away from each other, and in the second position extend from their respective pivot axes substantially in the same plane and towards each other. The braces or support means 5 substantially touch each other in the second position (see figure 4), whereas in the first position a free space is present between the support means 5.

The support means or braces 5 are lockable too in a continuously variable manner in desired positions in between the first and second positions, for example the position illustrated in figures 5, 8 and 10-12. For achieving this, the pivot axes may comprise quick lock means 16 for locking the support means 5 with respect to the respective frame parts 1a, 1b in any position from the first to the second positions, including any intermediate position. The functioning of such quick lock means 16 is illustrated in figure 3 (fig.3a fully unlocked; fig.3b partially locked and fig.3c fully locked).

As illustrated clearly in figure 1, the linkage arrangement 2 at its upper side (upper sides of arms 2a, 2b) defines additional support members (padding) 7 for objects to be transported which are positioned in the free space between the support means or braces 5 when latter are not in the second position.

Finally the frame parts 1a, 1b are provided with securing means 8 (best seen in figures 2b, 4, 5, 7 and 8) for securing objects to the cart, such as ropes, belts 8' or alike. These securing means may comprise automatic belt or rope tighteners.

The use of the cart will be described shortly hereafter. Figure 2 illustrates the process of collapsing the cart from an expanded position (fig.2a) through an intermediate position (fig.2b) with frame parts 1a, 1b still fully separated but braces 5 rotated upwards, to the collapsed position (fig.2c) with frame parts 1a, 1b close together. Figure 4 shows the cart with its braces 5 in their second position in which the braces or support means 5 substantially touch each other and define a support with limited dimensions hardly or not protruding beyond the outer limits of the remainder of the cart. In this position the cart is particularly well suited for transporting small objects.

Figure 5 shows the braces 5 in an intermediate position, which also is shown in figure 8 and which preferably may be used for transporting large sheet-shaped objects 9 which with a lower edge rests upon the support members 7 (padding) on top of the linkage arrangement 2.

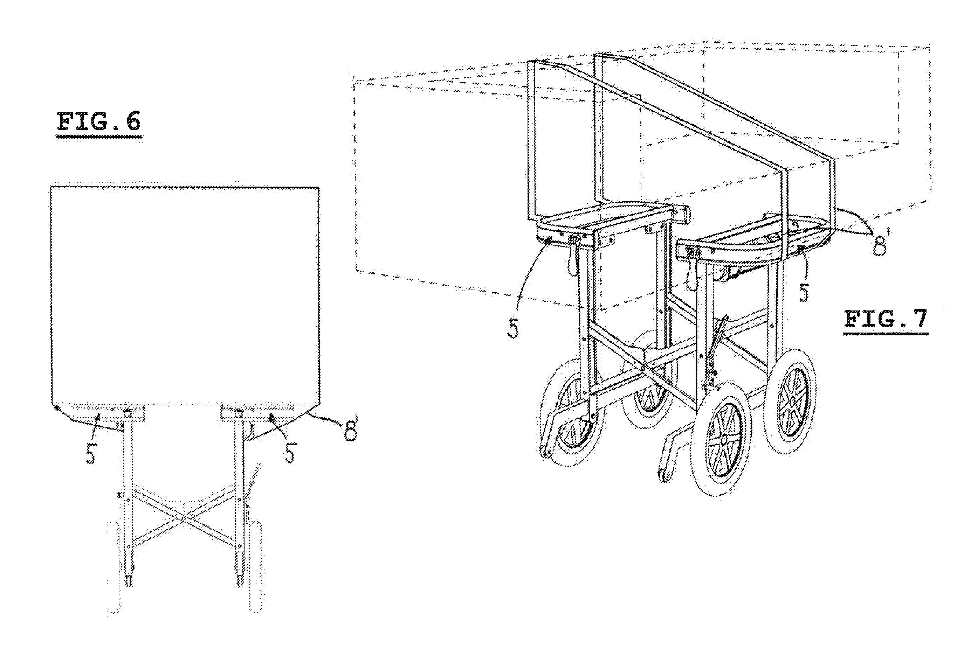

Figures 6 and 7 show the cart with its braces 5 in the first position (wherein a free space is present between the support means 5) in which a wide support is provided for large and heavy objects, such as for example a refrigerator (figure 6) or a couch (figure 7).

In figure 8 a sheet-like object 9 is received between the tilted braces 5 and rests upon the top (padding 7) of the arms 2a, 2b of the linkage arrangement 2. Belts 8' secure the object.

Figure 9 illustrates the use of the support wheels for avoiding the cart to tip over. The position of the support wheels 4 preferably should be such that the centre of gravity of the assembly of cart and object 11 transported thereon cannot move beyond the vertical line 12 extending upward from the point of contact between the ground surface and support wheels 4. The tilted position of the cart illustrated in figure 9 may be used to pass obstructions on the ground, to move the cart onto a side walk or other elevated surface or for positioning/removing objects onto/from the cart.

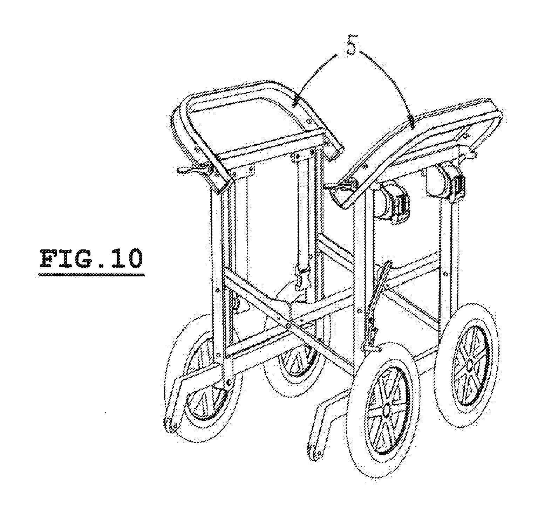

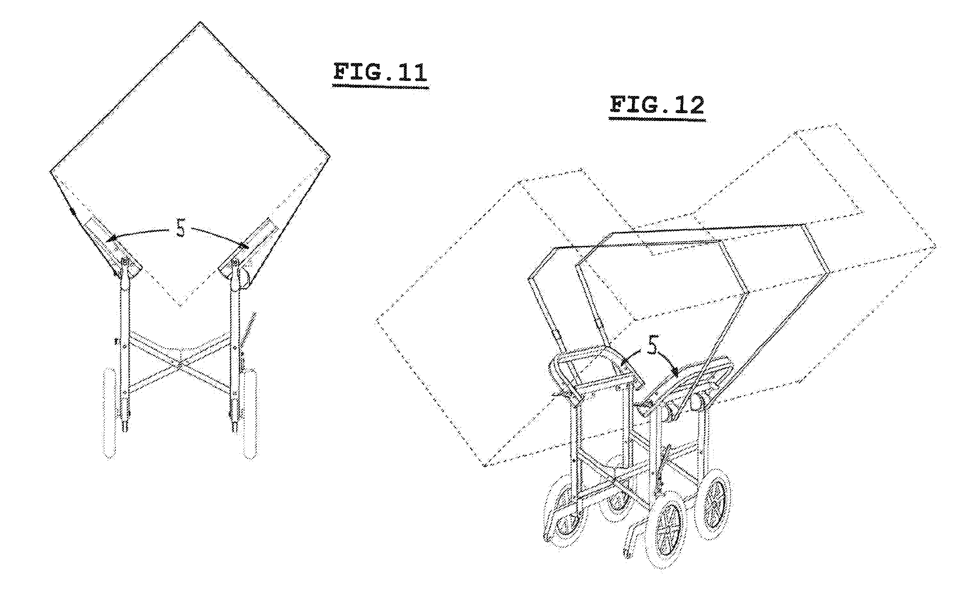

Finally figure 10 shows a position of the support means 5 at an angle of 45° (thus 90° with respect to each other), and the use of such a position for supporting objects is illustrated in figures 11 and 12.

The invention is not limited to the embodiments described before which may be varied widely within the scope of the invention as defined by the appending claims.

## Claims

1. Cart for transporting objects, with a frame, which frame at its lower side carries wheels and at its upper side is provided with two support means for supporting the objects to be transported by the cart, which support means are movable between a first position defining a support with a larger first width and a second position defining a support with a smaller second width.

2. Cart according to claim 1, wherein the support means are lockable too in desired positions in between the first and second positions.

3. Cart according to claim 2, wherein the support means are lockable in said desired positions in between the first and second positions in a continuously variable manner.

4. Cart according to any of the previous claims, wherein each support means is connected to the frame for a rotation around a substantially horizontally extending pivot axis.

5. Cart according to claim 4, wherein the support means in the first position extend from their respective pivot axes substantially in the same plane and away from each other, and in the second position extend from their respective pivot axes substantially in the same plane and towards each other.

6. Cart according to claim 5, wherein the support means substantially touch each other in the second position, whereas in the first position a free space is present between the support means.

7. Cart according to claim 4, 5 or 6, wherein each support means comprises a U-shaped brace having two legs of which the ends are pivotably connected to the frame.

8. Cart according to any of the claims 4-7, wherein the pivot axes comprise quick lock means for locking the support means with respect to the frame in any position from the first to the second positions, including any intermediate position.

9. Cart according to any of the previous claims, wherein the frame comprises two frame parts which are movable towards and away from each other between a collapsed position of the cart and an expanded position of the cart.

10. Cart according to claim 9, wherein the frame parts are connected by a linkage arrangement.

11. Cart according to claim 10, wherein the linkage arrangement at its upper side defines additional support members for objects to be transported.

12. Cart according to claim 10 or 11, wherein the linkage arrangement is capable of locking the frame parts in positions different from the collapsed position and expanded position.

13. Cart according to any of the previous claims, wherein the frame is provided with securing means for securing objects to the cart, such as ropes, belts or alike.

14. Cart according to any of the previous claims, wherein the wheels all are fixed wheels or at least in part are castor wheels.

15. Cart according to any of the previous claims, wherein the frame at least at one end of the cart is provided with support wheels located at an elevated level.
